# EUROPÄISCHE PATENTSCHRIFT

(11) **EP 1 278 314 B1**
(45) Veröffentlichungstag und Bekanntmachung des Hinweises auf die Patenterteilung: **10.01.2007**
(21) Anmeldenummer: 01440225.9
(22) Anmeldetag: 17.07.2001
(51) Int. Cl.: H04B 10/08, G01M 11/00, H04L 1/20, H04B 17/00

(54) **Überwachungseinheit für optische Burst-Signale**
Monitoring unit for optical burst signals
Module de surveillance pour des signaux en salves optiques

(43) Veröffentlichungstag der Anmeldung: 22.01.2003
(73) Patentinhaber: ALCATEL, 75008 Paris (FR)
(72) Erfinder: Eilenberger, Gert, Dr., 73230 Kirchheim (DE); Bigalk, Uwe, 71391 Leutenbach (DE)
(74) Vertreter: Menzietti, Domenico

(56) Entgegenhaltungen:
- EP-A- 0 999 670
- WO-A-01/20452
- US-A- 5 585 954
- US-A- 5 617 237

## Beschreibung

Die Erfindung betrifft eine Überwachungseinheit insbesondere für optische Burst-Signale.

Zur Bestimmung der Performance eines optischen synchronen Netzes, z.B. eines DWDM-SDH/SONET-Netzes, ist bekannt, die Signalqualität optischer Verbindungen während des Betriebes durch Beobachtung der Amplituden- und Phasenverteilung des optischen Signals zu messen und daraus eine Abschätzung der Bitfehlerhäufigkeit abzuleiten; DWDM=Dense Wavelength Division Multiplex, SDH=Synchronous Digital Hierarchy, SONET=Synchronous Optical Network. Dazu wird eine Q-Faktor-Messung durchgeführt, die direkt die Qualität des optischen Signals widerspiegelt; Q steht dabei für das Gaußsche Fehlerintegral. Gewonnen wird Q aus der Beobachtung des analogen Signals auf der elektrischen Ebene mit seinem Amplituden- und Phasenverlauf. Das Verfahren beruht auf gezielter Fehlabtastung, um einen schlechten Signal-Rausch-Abstand und eine erhöhte Bitfehlerhäufigkeit zu simulieren. Mit statistischen Methoden lässt sich dann der Q-Faktor ermitteln, der den Verhältnissen bei optimaler Abtastung entspricht. Das Prinzip des Q-Faktor Messgerätes beruht auf einer stichprobenartigen Abtastung des Augenmusters. In einem Zweiweg-Detektor arbeitet ein Komparator als Mittenabtaster mit fester Amplitudenschwelle und fester Phasenlage, während ein anderer Komparator als Messabtaster diese beiden Parameter variieren kann. Die

Ergebnisse der beiden Komparatoren werden von einer Exklusiv-Oder-Schaltung verglichen und Differenzen als Bitfehler gezählt. Das Verfahren ist auf synchrone, zeitkontinuierliche Signale mit einer stabilen, vorbekannten Sampling-Taktphase beschränkt.

Aus WO 01/20452 A1 ist ein protokoll- und bitratenunabhaengiges Testsystem bekannt. Es dient der Detektion von Bitfehlern in einem digitalen Kommunikationskanal unabhaengig vom Format oder der Uebertragungsrate. Das Testsystem beinhaltet zwei Schwellwertdetektoren zwecks Feststellung, ob das empfangene Signal bezueglichd er Amplitude zwischen einem minimalen und einem maximalen Wert liegt. Ferner ist eine Phasenregelung vorgesehen. Durch Scannen wird eine Augenmessung durchgefuehrt.

Aus EP 0 999 670 A2 ist ein Verfahren zur Messung der Signalguete eines digitalen Nachrichtenuebertragungssystems bekannt. Es wird dazu insbesondere eine Abtasteinrichtung mit einstellbarer Gleichspannungsschwelle, eine Detektionsvorrichtung zur Ermittlung der Bitrate und ein auf das Eingangssignal synchronisierter Taktgenerator verwendet.

Aufgabe der Erfindung ist es, eine Überwachungseinheit insbesondere für optische Burst-Signale in optischen, asynchronen Netzen, z.B. basierend auf Internet oder ATM zu schaffen, ATM=Asynchronous Transfer Mode.

Gelöst wird diese Aufgabe durch eine Überwachungseinheit nach Anspruch 1.

Die Überwachungseinheit, die auch als Messschaltung bezeichnet werden kann, hat optische Bursts fester und/oder variabler Länge zu überwachen. Die einzelnen Bursts sind mit sogenannten Guard Bands voneinander getrennt. Von Burst zu Burst können Signalpegelschwankungen im Bereich von einigen dB auftreten. Zudem kann die Taktfrequenz und die Phasenlage von Burst zu Burst variieren. Jeder Burst hat eine kurze, vordefinierte Preambel zur Takt- und Amplitudenrückgewinnung.

Die erfindungsgemäße Schaltung erlaubt eine Skalierung der zu messenden Burst-Signalamplitude. Die Schaltung ermöglicht ferner eine sehr schnelle Burst-Taktrückgewinnung, die ein Justieren der Messung auf den aktuellen Burst ermöglicht. Die Schaltung ermöglicht zudem eine Start-of-Burst Detektion, die eine grobe Bestimmung des Startzeitpunktes eines aktuellen Bursts basierend auf der Detektion des Guard Bands durchführt. In einer nachgeschalteten Burst-Synchronisationslogik wird eine feine Bestimmung des Starts der Payload des Bursts durchgeführt.

Ein Grundgedanke der Erfindung liegt darin, jeden empfangenen Burst zu synchronisieren und für jeden Burst einen variablen und einen festen Amplituden-Schwellwert sowie einen variablen und einen festen Phasenlagen-Wert zu ermitteln. Anstelle jeden Burst in die Q-Faktor Messung einfließen zu lassen, kann alternativ auch nur jede zweite Burst synchronisiert werden und die entsprechenden Werte ermittelt werden. Die Anzahl der in die Messung einfließenden Bursts kann in äquidistanten Abständen ausgewählt werden, z.B. jeder, jeder zweite, jeder dritte, oder beispielsweise in unregelmäßigen Abständen erfolgen, z.B. ausgewählt durch einen Zufallsgenerator. Die Erfindung ist nicht auf die Überwachung optischer Bursts beschränkt, sondern kann ebenso gut für die Überwachung elektrischer Bursts verwendet werden.

Das resultierende Fehlersignal aus den Vergleichen der Amplituden-Schwellwerte und der Phasenlagen-Werte wird mittels eines Gate weitergeleitet oder nicht. Das Gate wird durch die Synchronisationslogik derart gesteuert, dass nur die Payload Information des Burst Datenstroms für die Pseudo Fehlermessung genutzt wird. Mittels einer Software basierten Verarbeitung wird eine Extrapolation auf die aktuelle Bitfehlerrate durchgeführt. Somit können frühzeitig Signalverschlechterungen erkannt werden.

Bei einer vorteilhaften Ausgestaltung der Erfindung wird die Header- und Steuerinformation jedes Bursts zumindest teilweise überwacht und verarbeitet. Zusätzlich zur Q-Faktor Messung des gesamten Burst Datenstroms wird die Header- und Steuerinformation dazu benutzt, zu unterscheiden zwischen speziellen Burst Aufkommen, speziellensogenannten Burst Flows, und besonderen, geschalteten Pfaden, sogenannten Label Switched Paths. Letztere beinhalten eine spezielle Header-Information, die Labels. Allgemein ermöglicht die Einbeziehung von Header- und/oder Steuerinformationen die Messung spezieller, selektierter Burst Datenströme, z.B. Flows, Connections, Label Switched Paths, mit der Möglichkeit solche Burstströme in gesamten Netz zu verfolgen.

IP basierte optische Netze und optische Terabit Routing Knoten sind von besonderem Interesse für die Telekom- und Datenindustrie. Die vorliegende Erfindung stellt eine Performance-Überwachung zur Verfügung, die an jeder Stelle des Netzes oder Knotens eingesetzt werden kann, insbesondere in einer optisch transparenten Domäne, der sogenannten Optical Transparency Domain, um Burst-Signale ohne spezielle Vorkenntnisse des verwendeten Transportprotokolls zu überwachen.

Im folgenden wird ein Ausführungsbeispiel der Erfindung unter Zuhilfenahme einer Figur erläutert.

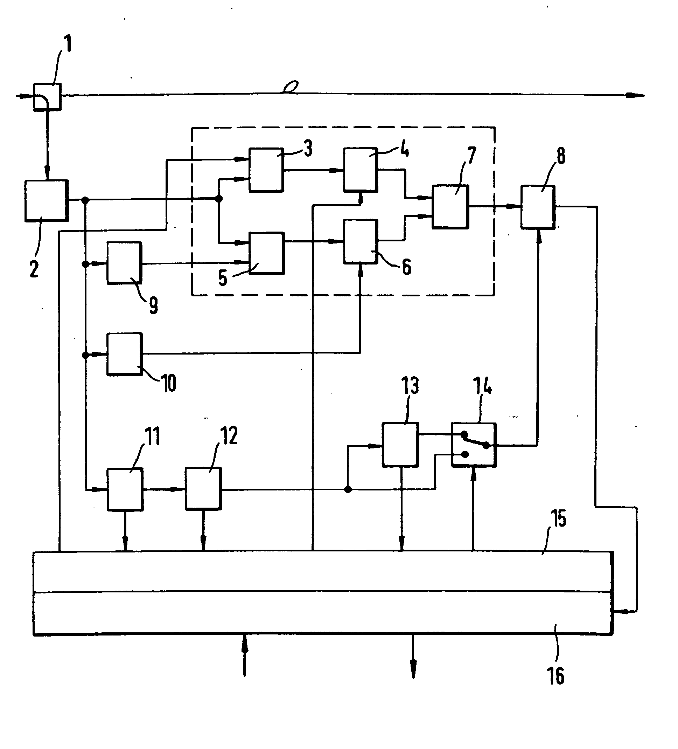

Die Figur zeigt eine erfindungsgemäße Überwachungseinheit für optische Burst-Signale.

Optische Netze basieren zunehmend auf asynchronen, paketorientierten Netzen wie z.B. ATM oder Internet. In solchen optischen Netzen können von Burst zu Burst Variationen im Signalpegel, in der Taktfrequenz und in der Phasenlage auftreten. Die Überwachungseinheit berücksichtigt bei der Q-Faktor-Messung, die als eine Signalgüte-Messung bezeichnet werden kann, diese Variationsmöglichkeiten und führt für jeden Burst eine separate Messung durch. Dazu wird jeder Burst synchronisiert und für jeden Burst werden vier Messparameter ermittelt. Die Messparameter enthalten einen variablen Amplituden-Schwellwert, einen festen Amplituden-Schwellwert, einen variablen Phasenlagen-Wert und einen festen Phasenlagen-Wert. Das Augendiagramm wird bei variierenden Amplituden-Schwellwerten und Sampling-Taktphasen ausgewertet. Damit wird eine Pseudo-Fehlermessung durchgeführt. Der Q-Faktor und die aktuelle Bitfehlerrate werden ausgehend von den gemessenen Werten extrapoliert und geschätzt. Die eigentliche Bitfehlermessung eines Datensignals wird aber dann am Ende eines Übertragungspfades durch das Netz in einem Empfänger bestimmt unter Berücksichtigung von Dekodierung, z.B. Viterbi-Dekoder, Fehlerkorrektur, z.B. Forward Error Correction, etc, wobei ein solcher Empfänger nicht Teil der hier beschriebenen Überwachungseinheit ist.

Die Überwachungseinheit beinhaltet einen Detektor für eine Q-Faktor Messung in Abhängigkeit mindestens eines variablen und mindestens eines festen Amplituden-Schwellwertes und mindestens eines variablen und mindestens eines festen Phasenlagen-Wertes, der einen Burst-Amplitudendetektor 9 zur Generierung eines festen Amplituden-Schwellwertes für jeden Burst, eine Burst-Taktrückgewinnung 10 zur Generierung eines festen Phasenlagen-Wertes für jeden Burst, einen Burst-Detektor 11 zur Erkennung des Beginn eines Bursts, und eine Steuerlogik 15 zur Generierung eines variablen Amplituden-Schwellwertes und eines variablen Phasenlagen-Wertes für jeden Burst beinhaltet.

Die Überwachungseinheit ist über einen asymmetrischen optischen Koppler 1 mit einer optischen Leitung verbunden. Die optische Leitung ist beispielsweise eine optische Glasfaserleitung, auf der optische Burst-Signale transportiert werden, z.B. in einem optischen, IP basierten Netz; IP=Internet Protocol. Der optische Koppler 1 koppelt beispielsweise 10% des Signalpegels der empfangenen Signale aus und leitet sie zu einem Optisch/Elektrischen-Umsetzer 2 weiter; die restlichen 90% werden beispielsweise z.B. zu einem optischen Empfänger zwecks Datenauswertung weitergeleitet.

Im Optisch/Elektrischen-Umsetzer 2 werden die empfangenen optischen Burst-Signale in elektrische Signale umgesetzt und anschließend zu fünf Bauelementen weitergeleitet. Die Weiterleitung erfolgt zu einem ersten Komparator 3, einem zweiten Komparator 5, dem Burst-Amplitudendetektor 9, der Burst-Taktrückgewinnung 10 und dem Burst-Detektor 11.

Im Komparator 3 werden die Amplituden des elektrischen Signals mit variablen Amplituden-Schwellen verglichen. Für jeden Burst wird eine neue, variable Amplituden-Schwelle ermittelt.

Im Komparator 5 werden die Amplituden des elektrischen Signals mit festen Amplituden-Schwellen verglichen. Für jeden Burst wird eine neue, feste Amplituden-Schwelle ermittelt. Die Ermittlung erfolgt im Amplitudendetektor 9, der einen Mittelwert auswählt, z.B. in Form einer festen Schwellspannung.

Dem Komparator 3 ist ein Entscheider 4 nachgeschaltet. Im Entscheider 4 wird das vom Komparator 3 gelieferte Ausgangssignal abgetastet, und zwar in Abhängigkeit einer variablen Phase. Für jeden Burst wird ein neuer, variabler Phasenlagen-Wert ermittelt. In das Ausgangssignal des Entscheiders fließt somit pro Burst ein variabler Amplituden-Schwellwert und ein variabler Phasenlagen-Wert ein.

Dem Komparator 5 ist ein Entscheider 6 nachgeschaltet. Im Entscheider 6 wird das vom Komparator 5 gelieferte Ausgangssignal abgetastet, und zwar in Abhängigkeit einer festen Phase. Für jeden Burst wird ein neuer, fester Phasenlagen-Wert ermittelt. In das Ausgangssignal des Entscheiders fließt somit pro Burst ein fester Amplituden-Schwellwert und ein fester Phasenlagen-Wert ein. Die Ermittlung des festen Phasenlagen-Wertes erfolgt in der Burst-Taktrückgewinnung 10, die einen Mittelwert einer festen Phase aus dem Sampling-Takt auswählt.

Entscheider 4 und 6 sind über ein EXOR 7 mit einem Gate 8 verknüpft.

Gate 8 liefert ein Fehlersignal, das einer Verarbeitungseinheit 16 zugeführt wird. Die Verarbeitungseinheit 16 ist beispielsweise ein entsprechend programmierter Mikroprozessor. Ihr werden Steuerdaten zur Berechnung von Extrapolation und Schätzung zugeführt. Aus dem Fehlersignal und den Steuerdaten ermittelt die Verarbeitungseinheit 16 eine Schätzung des Q-Faktors, der über einen Ausgang ausgegeben wird und zur Überwachung und Steuerung des Netzes verwendet wird, z.B. zur Nachregelung der Signalleistung auf der Sendeseite oder zur Umkonfigurierung des Netzes, wenn die Signalqualität des betreffenden, überwachten Pfades bestimmte Grenzwerte unterschreitet.

Der Burst-Detektor 11 dient der Erkennung des Beginns eines Bursts. Dazu wird eine Start-of-Burst Detektion durchgeführt, die eine grobe Bestimmung des Startzeitpunktes eines aktuellen Bursts basierend auf der Detektion des Guard Bands durchführt. Diese Start-of-Burst Information wird zum einen der Steuerlogik 15 zur Verfügung gestellt und zum anderen einer nachgeschalteten Burst-Synchronisationslogik 12, die eine feine Bestimmung des Starts der Payload des Bursts durchführt. Diese Start-of-Payload Information wird der Steuerlogik 15 zur Verfügung gestellt. Die Steuerlogik 15 generiert aus der Start-of-Burst und der Start-of-Payload Information sowie weiteren Informationen, die sie von der Verarbeitungseinheit 16 erhält und die Informationen über das Augendiagramm beinhalten, einen variablen Amplituden-Schwellwert und einen variablen Phasenlagen-Wert für jeden Burst. Die Steuerlogik 15 ist beispielsweise als entsprechend programmierter Mikroprozessor ausgeführt. Steuerlogik 15 und Verarbeitungseinheit 16 können auch auf einem Mikroprozessor, Digitalen Signalprozessor, FPGA oder dergleichen gemeinsam ausgeführt sein und haben mindestens eine Datenschnittstelle zwecks Datenaustausch.

Die Start-of-Payload Information wird ferner einer Extraktionseinheit 13 und einem Schalter 14 zugeführt sowie der Steuerlogik 15.

Die Extraktionseinheit 13 dient zur Extraktion des Headers und/oder von Steuerinformation. Die Header-Information und/oder die Steuerinformation dient zur selektiven Messung spezieller Bursts und wird zum Schalter 14 weitergeleitet sowie zur Steuerlogik 15.

Schalter 14 wird durch die Steuerlogik 15 angesteuert, die auswählt, welche Variante der Messung durchgeführt werden soll, eine generelle Q-Faktor Messung für alle Bursts oder eine selektive Q-Faktor Messung für spezielle Bursts. Für die erste Variante wird die Start-of-Payload Information als Steuersignal zum Gate 8 weitergeleitet, für die zweite Variante die Header Information. Für die zweite Variante werden die variablen Amplituden-Schwellwerte und die variablen Phasenlagen-Werte zusätzlich in Abhängigkeit von der Header-Information ermittelt.

Extraktionseinheit 13 und Schalter 14 sind optional. Ist keine Q-Faktor Messung bzw. Schätzung spezieller Bursts vorgesehen, so können sie durch eine direkte Verbindung von Ausgang Burst-Synchronisationslogik 12 und Steuereingang Gate 8 ersetzt werden.

## Patentansprüche

1. Überwachungseinheit für Burst-Signale, beinhaltend einen Detektor für eine Q-Faktor Messung in Abhängigkeit mindestens zweier variabler und mindestens zweier fester Amplituden-Schwellwerte und mindestens zweier variabler und mindestens zweier fester Phasenlagen-Werte, wobei der Detektor einen Burst-Amplitudendetektor (9) zur Generierung eines festen Amplituden-Schwellwertes für jedes in die Messung einzubeziehende Burst-Signal, eine Burst-Taktrückgewinnung (10) zur Generierung eines festen Phasenlagen-Wertes für jedes in die Messung einzubeziehende Burst-Signal und eine Steuerlogik (15) zur Generierung eines variablen Amplituden-Schwellwertes und eines variablen Phasenlagen-Wertes für jedes in die Messung einzubeziehende Burst-Signal beinhaltet, **dadurch gekenntzeichnet, dass** der Detektor einen Burst-Detektor (11) zur Erkennung des jeweiligen Beginns von Burst-Signalen beinhaltet, und dass die Überwachungseinheit ferner beinhaltet: einen ersten Komparator (3) zum Vergleich von empfangenen Burst-Signalen mit zugehörigen generierten, variablen Amplituden-Schwellwerten, einen zweiten Komparator (5) zum Vergleich der empfangenen Burst-Signale mit zugehörigen generierten, festen Amplituden-Schwellwerten, einen dem ersten Komparator (3) nachgeschalteten ersten Entscheider (4) zur Weiterleitung der Ausgangssignale des ersten Komparators (3) in Abhängigkeit von den Burst-Signalen zugehörigen generierten, variablen Phasenlagen-Werten, einen dem zweiten Komparator (5) nachgeschalteten zweiten Entscheider (6) zur Weiterleitung der Ausgangssignale des zweiten Komparators (5) in Abhängigkeit von den Burst-Signalen zugehörigen generierten, festen Phasenlagen-Werten, und ein EXOR-Gatter (7) zur Verknüpfung der Ausgangssignale des ersten und zweiten Entscheiders (5, 6).

2. Überwachungseinheit nach Anspruch 1, **dadurch gekennzeichnet, dass** die Überwachungseinheit beinhaltet eine dem Burst-Detektor (11) nachgeschaltete Burst-Synchronisationslogik (12) zur Bestimmung des jeweiligen Beginns der Payload von Burst-Signalen und einem dem EXOR-Gatter nachgeschalteten und von der Burst-Synchronisationslogik (12) gesteuerten Gate (8) zur Weiterleitung von Fehlersignalen zu einer Verarbeitungseinheit (16), die zur Schätzung eines Q-Faktors dient.

3. Überwachungseinheit nach Anspruch 2, **dadurch gekennzeichnet, dass** die Überwachungseinheit beinhaltet eine der Burst-Synchronisationslogik (12) nachgeschalteten Extraktionseinheit (13) zur Extraktion von Header- und/oder von Steuerinformation zur Messung spezieller Burst-Signale und einem von der Steuerlogik (15) angesteuerten Schalter (14), der zwischen Extraktionseinheit (13), Burst-Synchronisationslogik (12) und Gate (8) geschaltet ist.

4. Überwachungseinheit nach Anspruch 1, **dadurch gekennzeichnet, dass** die Überwachungseinheit zur Überwachung optischer Burst-Signale dient und einen Optisch/Elektrischen Umsetzer (2) zur Generierung von elektrischen Eingangssignalen für den Burst-Amplitudendetektor (9) die Burst-Taktrückgewinnung (10) und den Burst-Detektor (11) beinhaltet.

## Claims

1. Monitoring unit for burst signals, containing a detector for a Q-factor measurement as a function of at least two variable and at least two fixed amplitude threshold values and at least two variable and at least two fixed phase position values, wherein the detector contains a burst amplitude detector (9) for generating a fixed amplitude threshold value for each burst signal to be included in the measurement, a burst clock recovery (10) for generating a fixed phase position value for each burst signal to be included in the measurement and a control logic (15) for generating a variable amplitude threshold value and a variable phase position value for each burst signal to be included in the measurement, **characterised in that** the detector contains a burst detector (11) for identifying the respective start of burst signals, and **in that** the monitoring unit further contains: a first comparator (3) for comparing received burst signals with associated generated, variable amplitude threshold values, a second comparator (5) for comparing the received burst signals with associated generated, fixed amplitude threshold values, a first discriminator (4) connected downstream of the first comparator (3) for forwarding the output signals of the first comparator (3) as a function of generated variable phase position values associated with the burst signals, a second discriminator (6) connected downstream of the second comparator (5) for forwarding the output signals of the second comparator (5) as a function of generated, fixed phase position values associated with the burst signals, and an EXOR gate (7) for linking the output signals of the first and second discriminators (5, 6).

2. Monitoring unit according to claim 1, **characterised in that** the monitoring unit contains a burst synchronisation logic (12), connected downstream of the burst detector (11), for determining the respective start of the payload of burst signals and a gate (8) connected downstream of the EXOR gate and controlled by the burst synchronisation logic (12) for forwarding error signals to a processing unit (16) serving to estimate a Q-factor.

3. Monitoring unit according to claim 2, **characterised in that** the monitoring unit contains an extraction unit (13), connected downstream of the burst synchronisation logic (12), for extracting header and/or control information for measuring specific burst signals and a switch (14) triggered by the control logic (15), switched between extraction unit (13), burst synchronisation logic (12) and gate (8).

4. Monitoring unit according to claim 1, **characterised in that** the monitoring unit serves to monitor optical burst signals and contains an optical/electrical converter (2) for generating electric input signals for the burst amplitude detector (9), the burst clock recovery (10) and the burst detector (11).

## Revendications

1. Module de surveillance pour des signaux en salves, contenant un détecteur pour une mesure du facteur Q en fonction au moins de deux valeurs de seuil d'amplitude variables et au moins de deux valeurs de seuil d'amplitude fixes et au moins de deux valeurs de relation de phase variables et au moins de deux valeurs de relation de phase fixes, le détecteur contenant un détecteur d'amplitude de salves (9) destiné à générer une valeur de seuil d'amplitude fixe pour chaque signal en salves à intégrer dans la mesure, une récupération des impulsions de salves (10) destinée à générer une valeur de relation de phase fixe pour chaque signal en salves à intégrer dans la mesure et un système logique de commande (15) destiné à générer valeur de seuil d'amplitude variable et une valeur de relation de phase variable pour chaque signal en salves à intégrer dans la mesure, **caractérisé en ce que** le détecteur contient un détecteur de salves (11) destiné à détecter le début respectif des signaux en salves, et **en ce que** le module de surveillance contient en outre : un premier comparateur (3) destiné à comparer les signaux en salves reçus aux valeurs de seuil d'amplitude variables générées associées, un second comparateur (5) destiné à comparer les signaux en salves reçus aux valeurs de seuil d'amplitude fixes générées associées, un premier décideur (4) connecté en aval au premier comparateur (3) destiné à transmettre les signaux de sortie du premier comparateur (3) en fonction des valeurs de relation de phase variables générées associées aux signaux en salves, un second décideur (6) connecté en aval au second comparateur (5) destiné à transmettre les signaux de sortie du second comparateur (5) en fonction des valeurs de relation de phase fixes générées associées aux signaux en salves, et une porte de OU exclusif (7) destinée à lier les signaux de sortie du premier et du second décideur (5, 6).

2. Module de surveillance selon la revendication 1, **caractérisé en ce que** le module de surveillance contient un système logique de synchronisation de salves (12) connecté en aval au détecteur de salves (11) destiné à déterminer le début respectif de la charge utile des signaux en salves et une porte (8) connectée en aval à la porte de OU exclusif et commandée par le système logique de synchronisation de salves (12) destiné à transmettre les signaux d'erreur à une unité de traitement (16) qui sert à estimer un facteur Q.

3. Module de surveillance selon la revendication 2, **caractérisé en ce que** le module de surveillance contient une unité d'extraction (13) connectée en aval au système logique de synchronisation de salves (12) destiné à extraire les informations d'en-tête et/ou les informations de commande pour mesurer les signaux spéciaux en salves et un commutateur (14) commandé par le système logique de commande (15) qui est commuté entre l'unité d'extraction (13), le système logique de synchronisation de salves (12) et la porte (8).

4. Module de surveillance selon la revendication 1, **caractérisé en ce que** le module de surveillance sert à la surveillance des signaux optiques en salves et contient un convertisseur optique/électrique (2) destiné à générer des signaux d'entrée électriques pour le détecteur d'amplitude de salves (9), la récupération des impulsions de salves (10) et le détecteur de salves (11).
